# EUROPÄISCHE PATENTSCHRIFT

(11) **EP 2 351 187 B1**
(45) Veröffentlichungstag und Bekanntmachung des Hinweises auf die Patenterteilung: **18.12.2013**
(21) Anmeldenummer: 09756672.3
(22) Anmeldetag: 12.11.2009
(51) Int. Cl.: H02J 9/06

(54) **UNTERBRECHUNGSFREIE STROMVERSORGUNGSEINRICHTUNG**
UNINTERRUPTIBLE POWER SUPPLY DEVICE
DISPOSITIF D'ALIMENTATION ÉLECTRIQUE SANS INTERRUPTION

(30) Priorität: 28.11.2008 DE 202008015784 U
(43) Veröffentlichungstag der Anmeldung: 03.08.2011
(73) Patentinhaber: Woelke Industrieelektronik GmbH, 45239 Essen (DE)
(72) Erfinder: WOELKE, Werner, 45239 Essen (DE)
(74) Vertreter: Nunnenkamp, Jörg
(86) Internationale Anmeldenummer: PCT/EP2009/008049
(87) Internationale Veröffentlichungsnummer: WO 2010/060540

(56) Entgegenhaltungen:
- WO-A1-02/095895
- JP-A- 5 135 964
- US-A- 3 857 068
- US-A- 4 994 726

## Beschreibung

Die Erfindung betrifft eine unterbrechungsfreie Stromversorgungseinrichtung, insbesondere zur elektrischen Energieversorgung von untertägigen Messgeräten, vorzugsweise von Gasanalysegeräten, mit wenigstens einem Akkumulator sowie einem elektronischen Steuerelement, welche gemeinsam sekundärseitig an einen Übertrager angeschlossen sind.

Unter einer unterbrechungsfreien Stromversorgungseinrichtung versteht man eine Einrichtung zur Stromversorgung, welche beispielsweise bei Störungen im Stromnetz oder einem Ausfall des Stromnetzes die Versorgung kritischer elektrischer Verbraucher sicherstellt. Unterbrechungsfreie Stromversorgungseinrichtungen werden vielfältig eingesetzt, beispielsweise in Verbindung mit elektrischen Sicherheitseinrichtungen für Dampf- oder Gasturbinenanlagen, wie dies die DD 277 565 A1 erläutert. Der heute überwiegende Einsatz solcher unterbrechungsfreien Stromversorgungseinrichtungen für Computersysteme wird beispielsweise in der DE 690 28 409 T2 beschrieben.

Die gattungsbildende DE 34 10 719 A1 befasst sich mit einer unterbrechungsfreien Stromversorgungseinrichtung, die in Kombination mit einem tragbaren Stromversorgungsgerät für Grubenbaue und andere explosionsgefährdete Bereiche zum Einsatz kommt. Zu diesem Zweck findet sich in einem gegenüber Schlagwetter geschützten Gehäuse wenigstens ein Akkumulator in Verbindung mit einer elektrischen Schaltungsanordnung, welche Eingangsanschlüsse für eine gleich gerichtete, von einem Netz oder Netzteil abgeleitete Speisespannung aufweist. Die Schaltungsanordnung ist mit wenigstens zwei Ausgängen ausgerüstet und liefert auf diese Weise eine Versorgungsspannung für das zu versorgende elektrische Gerät, bei dem es sich um einen Gasanalysator handelt oder handeln kann, der beispielsweise eingesetzt wird, um den Methangehalt unter Tage zu bestimmen (vgl. DE 10 2006 059 566 A1).

Im Rahmen der nächstkommenden US 4 994 726 wird eine unterbrechungsfreie Stromversorgungseinrichtung erläutert, die mit einem Akkumulator sowie einem elektronischen Steuerelement ausgerüstet ist. Außerdem verfügt der dortige Übertrager primärseitig über einen Schalter.

Die JP 05 135 964 A befasst sich mit einer Thermosicherung als Überhitzungsschutz für Transformatoren.

Die WO 02/095895 offenbart das Auslösen einer Schmelzsicherung durch aktives kurzschließen mittels Hableiterschalter. Der Halbleiterschalter wird durch die über einen Strommesswiderstand anliegende Spannung, oder mittels eines NTC der die Temperatur eines Schutzwiderstandes erfasst, geschaltet.

Der Stand der Technik hat sich grundsätzlich bewährt, stößt jedoch dann an Grenzen, wenn hohe Versorgungsspannungen für die unterbrechungsfreie Stromversorgungseinrichtung beherrscht werden müssen und zugleich die Gefahr von Überschlägen oder allgemein Überhitzungen besteht und als Folge hiervon eine unmittelbare Abschaltung der Stromversorgung erforderlich wird.

Folgerichtig liegt der vorliegenden Erfindung das technische Problem zugrunde, bei einer etwaigen Störung eine sofortige Abschaltung einer Spannungsversorgung sicherzustellen und zugleich die Möglichkeit zu eröffnen, auch hohe eingangsseitige Spannungen verarbeiten zu können.

Zur Lösung dieser technischen Problemstellung ist Gegenstand der Erfindung eine unterbrechungsfreie Stromversorgungseinrichtung nach Anspruch 1. In der Regel ist die Thermosicherung in wenigstens einer primärseitigen Wicklung oder allgemein primärseitig des Transformators bzw. Übertragers angeordnet. Auf diese Weise lässt sich eine primärseitige Temperaturüberlast unmittelbar erfassen. Das gleiche gilt für einen etwaigen Windungskurzschluss oder auch einen Überschlag in der primärseitigen Wicklung (beispielsweise als Folge einer zu hohen Temperatur in diesem Bereich).

In jenem Fall sorgt die Thermosicherung bei einer solchen (primärseitigen) Überlast oder einer erhöhten Temperatur dafür, dass über den Schalter die primärseitige Spannungsversorgung unmittelbar unterbrochen wird, sodass eine Schädigung der eigentlichen und sekundärseitig vorgesehenen unterbrechungsfreien Stromversorgungseinrichtung bzw. der an dieser Stelle meistens realisierten Akkumulatoren sowie des elektronischen Steuerelementes nicht auftritt. Auf diese Weise ist die erfindungsgemäße unterbrechungsfreie Stromversorgungseinrichtung auch und insbesondere in der Lage, relativ hohe primärseitige (Wechsel-)Spannungen verarbeiten und beherrschen zu können. Denn ein etwaiger Windungskurzschluss, eine Temperaturüberlast oder sogar ein Überschlag in der primärseitigen Wicklung (und natürlich auch in der sekundärseitigen Wicklung) wird unmittelbar und praktisch verzögerungsfrei von der Thermosicherung registriert und in eine Betätigung des Schalter umgesetzt, welcher die gesamte Spannungs- bzw. Stromversorgung der unterbrechungsfreien Stromversorgungseinrichtung unmittelbar abschaltet und damit einen Brand, eine Explosion etc. verhindert.

Das wird im Einzelnen so bewerkstellig, dass der mit Hilfe der Thermosicherung beaufschlagte Schalter in der Regel in einem Kurzschlussstromkreis ausgangsseitig der primärseitigen Spannungsversorgung für die unterbrechungsfreie Stromversorgungseinrichtung bzw. eingangsseitig der unterbrechungsfreien Stromversorgungseinrichtung angeordnet ist. Der Kurzschlussstromkreis wird dabei durch eine Trennsicherung geschützt, welche bei einem tatsächlichen Kurzschluss die primärseitige Spannungsversorgung von der unterbrechungsfreien Stromversorgungseinrichtung abtrennt bzw. die primärseitige Spannungsversorgung unterbricht.

In den Kurzschlussstromkreis ist in der Regel ein Widerstand eingeschleift, bei dem es sich vorteilhaft um einen Hochleistungswiderstand handelt. Ein solcher Hochleistungswiderstand kann hohe Leistungen bis ca. 50 Joule oder noch mehr verarbeiten und ist in der Regel als Kohlepulver-Widerstand ausgeführt.

Es hat sich bewährt, wenn der Schalter zweiteilig ausgebildet ist, wobei ein Schaltelement in dem Kurzschlussstromkreis primärseitig des Transformators angeordnet ist, wohingegen sich ein Betätigungselement in einem Auslöseschaltkreis befindet. Dieser Auslöseschaltkreis ist zusätzlich zu dem Kurzschlussstromkreis und einem Primärstromkreis eingangsseitig der unterbrechungsfreien Stromversörgungseinrichtung bzw. primärseitig des Übertragers realisiert.

Im Allgemeinen verfügt der Auslösestromkreis mit dem darin befindlichen Betätigungselement des Schalters über einen Gleichrichter, welcher zur Beaufschlagung des betreffenden Betätigungselementes dient. Durch diesen Gleichrichter wird sichergestellt, dass seine abgegebene und am Betätigungselement anliegende Gleichspannung das Schaltelement beaufschlagt. Denn bei dem Betätigungselement handelt es sich vorteilhaft um eine Relaisspule, während das Schaltelement als Relaiskontakt ausgelegt ist.

Eine an der Relaisspule anliegende Gleichspannung genügender Stärke stellt also sicher und sorgt dafür, dass das Schaltelement bzw. der Relaiskontakt angezogen wird und folglich der Kurzschlussstromkreis geschlossen wird. Als Folge hiervon löst die Trennsicherung unmittelbar aus und unterbricht die primärseitige Stromversorgung bzw. den Primärstromkreis insgesamt. Diese Verfahrensabfolge stellt sich ein, sobald der Auslöseschaltkreis in Aktion tritt. Das ist dann der Fall, wenn die Thermosicherung auslöst.

Insgesamt hat es sich bewährt, wenn der Schalter bzw. das an dieser Stelle vorteilhaft eingesetzte Relais gekapselt ausgeführt ist. Eine solche Kapselung beispielsweise in einem Gehäuse (aus Glas) unter Vakuum ist erforderlich, um problemlos Spannungsspitzen bis in den kV-Bereich ohne Funkenbildung verarbeiten zu können. Selbstverständlich kann anstelle eines solchen Relais auch ein elektronischer Schalter wie ein Thyristor eingesetzt werden.

Bei der Thermosicherung handelt es sich im einfachsten Fall um eine Schmelzlotsicherung, bei welcher das Schmelzlot bei Überschreiten einer bestimmten Temperatur schmilzt und einen Kontakt unterbricht. Selbstverständlich sind auch andere Thermosicherungen denkbar und werden mit abgedeckt.

Im Ergebnis wird eine unterbrechungsfreie Stromversorgungseinrichtung zur Verfügung gestellt, bei welcher mit einer relativ hohen Eingangsspannung bzw. Primärspannung gearbeitet werden kann. Denn die Thermosicherung detektiert problemlos etwaige Überschläge oder Erhitzungen der primärseitigen Wicklung des Übertragers. Sobald die Thermosicherung anspricht bzw. unterbrochen wird, wird der Auslöseschaltkreis beaufschlagt und die anliegende Wechselspannung mit Hilfe des dortigen Gleichrichters in eine Gleichspannung umgewandelt, um das als Relaisspule ausgeführte Betätigungselement zu beaufschlagen. Dieses zieht den als Schaltelement ausgeführten Relaiskontakt an, so dass unmittelbar der Kurzschlussstromkreis geschlossen wird und die dort vorgesehene Trennsicherung und folglich die Eingangsspannung unterbrochen wird.

Das alles gelingt unter Berücksichtigung etwaiger zusätzlicher Spannungsspitzen, weil insofern der Schalter gekapselt ausgeführt ist und das Auftreten von Funken verhindert. Das ist mit der ebenfalls nicht zur Bildung von Funken neigenden Thermosicherung von besonderer Bedeutung, weil die erfindungsgemäße unterbrechungsfreie Stromversorgungseinrichtung üblicherweise untertage und in Schlagwetter gefährdeten Bereichen eingesetzt wird. Dabei wird insgesamt ein eigensicherer Ausgangsstromkreis zur Verfügung gestellt, weil die an dieser Stelle vorgesehenen Akkumulatoren bzw. der wenigstens eine Akkumulator in Verbindung mit dem elektronischen Steuerelement auch bei einer Unterbrechung des Primärstromkreises die elektrische Energieversorgung des meistens angeschlossenen Gasanalysegerätes sicherstellt.

D.h., selbst bei einer Unterbrechung der primärseitigen Energieversorgung findet eine ununterbrochene Gasmessung statt und stellen sich insbesondere keine langwierigen Aufheizprozeduren statt, wie sie nach einem etwaigen Ausfall der Energieversorgung solcher Gasanalysegeräte oftmals erforderlich sind (vgl. DE 34 10 719 A1). Darüber hinaus ist auch die kontinuierliche Sensierung des Gasgehaltes eine besonders große Sicherheit gewährleistet, weil auch bei einem Ausfall der Spannungsversorgung ein etwaiger Anstieg des Methangehaltes oder anderer Gase am Einsatzort des Gasanalysegerätes zuverlässig erfasst und gemeldet wird. Hierin sind die wesentlichen Vorteile zu sehen.

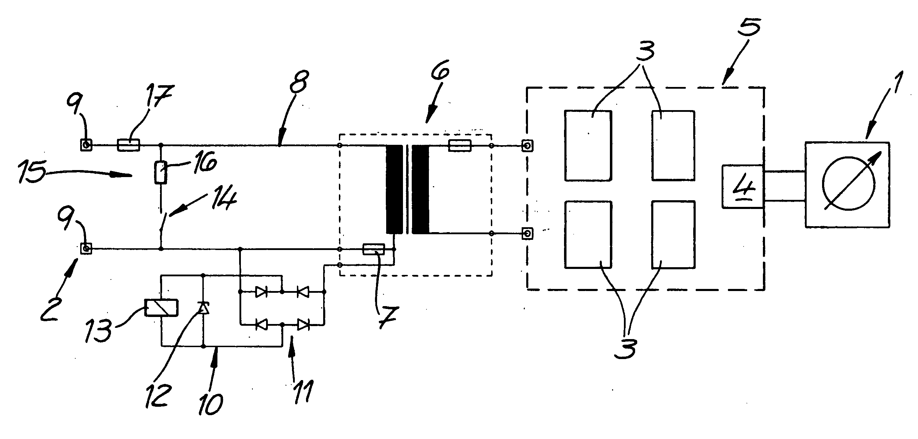

Im Folgenden wird die Erfindung anhand einer lediglich ein Ausführungsbeispiel darstellenden Zeichnung näher erläutert. Die einzige Figur zeigt die erfindungsgemäße unterbrechungsfreie Stromversorgungseinrichtung schematisch.

In der Darstellung ist eine unterbrechungsfreie Stromversorgungseinrichtung gezeigt, die nach dem Ausführungsbeispiel zur elektrischen Energieversorgung von untertägigen Messgeräten, im Beispielfall zur elektrischen Energieversorgung von einem oder mehreren Gasanalysegeräten 1 genutzt wird. Mit Hilfe des einen oder der mehreren Gasanalysegeräte 1 kann u. a. der Methangehalt untertage erfasst und an eine nicht dargestellte Meldezentrale übermittelt werden. Auf diese Weise wird sichergestellt, dass es beispielsweise nicht zu einer Schlagwetterexplosion kommt. Dazu ist es erforderlich, dass die unterbrechungsfreie Stromversorgungseinrichtung für eine kontinuierliche elektrische Energieversorgung des Gasanalysegerätes 1 auch bei einer Unterbrechung einer primärseitigen Spannungsversorgung 2 sorgt.

Zu diesem Zweck verfügt die dargestellte unterbrechungsfreie Stromversorgungseinrichtung über wenigstens einen Akkumulator 3 sowie ein elektronisches Steuerelement 4. Tatsächlich sind im Ausführungsbeispiel vier Akkumulatoren 3 vorgesehen, die von dem elektronischen Steuerelement 4 hinsichtlich ihrer Leistungsabgabe und zum Aufladen beaufschlagt werden. Die Akkumulatoren 3 und das elektronische Steuerelement 4 sind nach dem Ausführungsbeispiel Bestandteil einer eigenen unterbrechungsfreien Stromversorgungseinrichtung 5, die auf eine Eingangsspannung von 230 Volt Wechselspannung ausgelegt ist. Das ist selbstverständlich nicht zwingend.

In jedem Fall sind die vier Akkumulatoren 3 im Beispielfall sowie das elektronische Steuerelement 4 gemeinsam und sekundärseitig an einen Übertrager 6 angeschlossen. Der Übertrager 6 wird primärseitig von der primärseitigen Spannungsversorgung 2 beaufschlagt, bei welcher es sich im Beispielfall um eine 660 Volt-Wechselspannung handelt. Der Übertrager 6 sorgt nun dafür, dass die vorerwähnte primärseitige Spannungsversorgung 2 auf die Eingangsspannung für die Stromversorgungseinrichtung 5 herunter transformiert wird, und zwar im Beispielfall von 660 Volt-Wechselspannung auf 230 Volt-Wechselspannung. Das ist selbstverständlich nur als Beispiel zu werten.

Um nun eine zu hohe Temperatur primärseitig des Übertragers 6 erfassen zu können, verfügt der Übertrager 6 primärseitig über eine Thermosicherung 7. Diese Thermosicherung 7 spricht selbstverständlich auch dann an, wenn sich infolge zu hoher Temperatur ein Kurzschluss oder ein Windungskurzschluss der primärseitigen Wicklung einstellt. Nach dem Ausführungsbeispiel ist die Thermosicherung 7 in der primärseitigen Wicklung des Übertragers 6 angeordnet, um an dieser Stelle die beschriebene Temperaturüberlast zu detektieren. Bei der Thermosicherung 7 handelt es sich im einfachsten Fall um eine Schmelzlötsicherung, die bei Temperaturen von ca. 100 °C und mehr einen Primärstromkreis 8 zwischen zwei Anschlussklemmen 9 unterbricht.

Als Folge hiervon wird bei unterbrochenem Primärstromkreis 8 ein Auslöseschaltkreis 10 aktiv, weil nun der Strom von der einen Klemme 9 über die primärseitige Wicklung des Übertragers 6 über den Auslöseschaltkreis 10 zur anderen Klemme 9 und umgekehrt geführt wird. Bei intakter Thermosicherung 7 findet dagegen kein Stromfluss durch den Auslöseschaltkreis 10 statt.

Man erkennt, dass der Auslöseschaltkreis 10 mit einem Brückengleichrichter 11, einer Zener-Diode 12 oder einem vergleichbaren Spannungsstabilisierer sowie einem Betätigungselement 13 als Bestandteil eines zweiteiligen Schalters 13, 14 mit Betätigungselement 13 und Schaltelement 14 ausgerüstet ist. Bei dem im Auslöseschaltkreis 10 befindlichen Betätigungselement 13 handelt es sich nach dem Ausführungsbeispiel und nicht einschränkend um ein gekapseltes Relais 13,14 bzw. eine Relaisspule 13, welche zusammen mit dem Schaltelement 14 bzw. einem zugehörigen Relaiskontakt 14 gemeinsam gekapselt ausgelegt ist. D.h., der zweiteilige Schalter 13, 14 ist insgesamt gekapselt ausgeführt.

Schlussendlich erkennt man noch einen Kurzschlussstromkreis 15, in welchem ein Widerstand, insbesondere ein Hochleistungswiderstand 16 sowie das Schaltelement 14 des zweiteiligen Schalters 13, 14 angeordnet sind. Bei dem Widerstand respektive Hochleistungswiderstand 16 handelt es sich um einen Kohlepulverwiderstand, welcher hohe elektrische Leistungen bis zu ca. 50 Joule oder noch mehr aufzunehmen in der Lage ist. Dadurch ist der Primärstromkreis 8 insgesamt auch für höhere Spannungen und größere elektrische Leistungen ausgelegt, als die primärseitige Spannungsversorgung zur Verfügung stellt.

Tatsächlich können Spannungsspitzen bis zu mehreren kV beherrscht werden wie sie oftmals in untertägigen Stromnetzen zu beobachten sind. Das alles gelingt, ohne dass offene Funken entstehen, weil insofern der Schalter 13, 14 als gekapseltes Relais 13, 14 ausgeführt ist und ebenso die Thermosicherung 7 wie eine Trennsicherung 17 keine Funken erzeugen. Folgerichtig eignet sich die dargestellte Stromversorgungseinrichtung besonders für den Betrieb in explosionsgefährdeten Bereichen.

Die Funktionsweise ist wie folgt. Im Normalbetrieb ist der Primärstromkreis 8 zwischen den beiden Anschlussklemmen 9 und unter Zwischenschaltung der primärseitigen Wicklung des Übertragers 6 geschlossen, so dass sekundärseitig des Übertragers 6 die gewünschte Ausgangsspannung von 230 Volt Wechselspannung im Beispielfall zur Verfügung steht, um die dortige Stromversorgungseinrichtung 5 bzw. die vier Akkumulatoren 3 in Verbindung mit dem elektronischen Steuerelement 4 mit der erforderlichen elektrischen Energie (zum Aufladen der Akkumulatoren und zum Betrieb des Gasanalysegerätes 3) zu versorgen.

Kommt es nun jedoch zu einer erhöhten Temperatur in oder an der primärseitigen Wicklung des Übertrages 6, so spricht die Thermosicherung 7 an und unterbricht den Primärstromkreis 8. Als Folge hiervon wird der zuvor passive Auslöseschaltkreis 10 aktiv und sorgt der dortige Gleichrichter 11 dafür, dass eine Gleichspannung an den Klemmen der Zener-Diode 12 und folglich auch eingangsseitig des Betätigungselementes bzw. der Relaisspule 13 ansteht. Die Zener-Diode 12 sorgt in diesem Zusammenhang für eine stabile Gleichspannung.

Dadurch wird der Relaiskontakt bzw. das Schaltelement 14 und damit der Kurzschlussstromkreis 15 geschlossen. Das hat unmittelbar zur Folge, dass die primärseitige Spannungsversorgung 2 über den Kurzschlussstromkreis 15 geführt wird, so dass die dort vorgesehene und zum Schutz des Kurzschlussstromkreises 15 realisierte Trennsicherung 17 auslöst und die primärseitige Spannungsversorgung 2 trennt, und zwar ohne dass bei diesen sämtlichen Vorgängen irgendwelche Funken erzeugt werden. D.h., die beschriebene unterbrechungsfreie Stromversorgungseinrichtung eignet sich wie bereits dargelegt besonders für den untertägigen Einsatz oder allgemein für den Einsatz in explosionsgefährdeten Bereichen.

Dennoch wird ein insgesamt eigensicherer Ausgangsstromkreis zur Verfügung gestellt, welcher für eine kontinuierliche elektrische Energieversorgung des ausgangsseitigen Gasanalysegerätes 1 sorgt. Denn nach Ausfall bzw. Unterbrechung der primärseitigen Spannungsversorgung 2 wird die elektrische Energieversorgung des Gasanalysegerätes 1 durch die Akkumulatoren 3 in Verbindung mit dem elektronischen Steuerelement 4 sichergestellt. Als Folge hiervon können gefährliche Gaskonzentrationen auch bei einem Ausfall der primärseitigen Spannungsversorgung 2 unmittelbar und durchgängig erfasst und beispielsweise in ein Alarmsignal umgesetzt werden. Das ist auch und insbesondere von besonderer Bedeutung, weil Gasanalysegeräte 1 üblicherweise nach einem etwaigen Stromausfall relativ lange Aufheizzeiten benötigen, was erfindungsgemäß ausdrücklich vermieden wird.

## Patentansprüche

1. Unterbrechungsfreie Stromversorgungseinrichtung, insbesondere zur elektrischen Energieversorgung von untertägigen Messgeräten, vorzugsweise von Gasanalysegeräten (1), mit wenigstens einem Akkumulator (3) sowie einem elektronischen Steuerelement (4), welche gemeinsam sekundärseitig an einen Übertrager (6) angeschlossen sind,
**dadurch gekennzeichnet, dass**
- der Übertrager (6) primärseitig mit einer Thermosicherung (7) sowie einem Schalter (13, 14) ausgerüstet ist, wobei
- der Schalter (13, 14) bei aktivierter Thermosicherung (7) eine primärseitige Spannungsversorgung (2) unterbricht,
- der Schalter (13, 14) in einem durch eine Trennsicherung (17) geschützten Kurzschlussstromkreis (15) ausgangsseitig der primärseitigen Spannungsversorgung (2) angeordnet ist,
- die Trennsicherung (17) die primärseitige Stromversorgung (2) bei einem tatsächlichen Kurzschluss unterbricht,
- der Schalter (13, 14) zweiteilig mit im Kurzschlussstromkreis (15) angeordnetem Schaltelement (14) und in einem Auslöseschaltkreis befindlichen Betätigungselement (13) ausgebildet ist,
- der Auslöseschaltkreis (10) einen Gleichrichter (11) zur Beaufschlagung des Betätigungselementes (13) aufweist, und wobei
- bei ansprechender Thermosicherung (7) der Auslöseschaltkreis (10) beaufschlagt und eine anliegende Wechselspannung mit Hilfe des Gleichrichters (11) in eine Gleichspannung umgewandelt wird, um das Betätigungselement (13) zu beaufschlagen, so dass
- unmittelbar der Kurzschlussstromkreis (15) geschlossen und die dort vorgesehene Trennsicherung (17) sowie folglich die primärseitige Spannungsversorgung (2) unterbrochen wird.

2. Stromversorgungseinrichtung nach Anspruch 1, **dadurch gekennzeichnet, dass** die Thermosicherung (7) in wenigstens einer primärseitigen Wicklung des Übertragers (6) angeordnet ist, um einen etwaigen Windungskurzschluss oder eine andere Temperaturüberlast zu sensieren.

3. Stromversorgungseinrichtung nach Anspruch 1 oder 2, **dadurch gekennzeichnet dass** in den Kurzschlussstromkreis (15) ein Widerstand, insbesondere ein Hochleistungswiderstand (16), eingeschleift ist.

4. Stromversorgungseinrichtung nach einem der Ansprüche 1 bis 3, **dadurch gekennzeichnet, dass** der Schalter (13, 14) als Relais (13, 14) ausgebildet ist.

5. Stromversorgungseinrichtung nach einem der Ansprüche 1 bis 4, **dadurch gekennzeichnet, dass** der Schalter (13, 14) gekapselt ausgeführt ist.

6. Stromversorgungseinrichtung nach einem der Ansprüche 1 bis 5, **dadurch gekennzeichnet, dass** das Betätigungselement (13) des Schalters (13, 14) als Relaisspule (13) und das Schaltelement (14) als Relaiskontakt (14) ausgelegt sind.

## Claims

1. An uninterruptible power supply device, in particular for supplying electrical power for underground measuring instruments, preferably for gas analysis equipment (1), having at least one accumulator (3) and an electronic control element (4), which are jointly connected to the secondary side of a transformer (6),
**characterized in that**
- the transformer (6) is equipped on the primary side with a thermal fuse (7) and a switch (13, 14), wherein
- when the thermal fuse (7) is activated the switch (13, 14) interrupts a primary-side voltage supply (2),
- the switch (13, 14) is arranged in a short-circuiting circuit (15), protected by a switch fuse (17), at the output of the primary-side voltage supply (2),
- the switch fuse (17) interrupts the primary-side power supply (2) in the event of an actual short circuit,
- the switch (13, 14) is implemented in two parts with a switching element (14) arranged in the short-circuiting circuit (15) and an actuating element (13) located in a triggering circuit,
- the triggering circuit (10) comprises a rectifier (11) for energizing the actuating element (13), and wherein
- when the thermal fuse (7) responds, the triggering circuit (10) is activated and by means of the rectifier (11) an applied AC voltage is converted into a DC voltage in order to energize the actuating element (13), with the result that
- immediately the short-circuiting circuit (15) is closed and the switch fuse (17) which is provided there, and consequently the primary-side voltage supply (2), is interrupted.

2. The uninterruptible power supply device according to Claim 1,
**characterized in that**
the thermal fuse (7) is arranged in at least one primary-side winding of the transformer (6), in order to sense a possible winding short-circuit or other thermal overload.

3. The uninterruptible power supply device according to Claim 1 or 2,
**characterized in that**
a resistance, in particular a high-power resistance (16), is looped into the short-circuiting circuit (15).

4. The uninterruptible power supply device according to any one of Claims 1 to 3,
**characterized in that**
the switch (13, 14) is formed by a relay (13, 14).

5. The uninterruptible power supply device according to any one of Claims 1 to 4,
**characterized in that**
the switch (13, 14) is encapsulated.

6. The uninterruptible power supply device according to any one of Claims 1 to 5,
**characterized in that**
the actuator element (13) of the switch (13, 14) is designed as a relay coil (13) and the switch element (14) as a relay contact (14).

## Revendications

1. Dispositif d'alimentation électrique sans interruption, en particulier pour l'alimentation en énergie électrique d'appareils de mesure sous terre, de préférence d'appareils d'analyse de gaz (1), avec au moins un accumulateur (3) ainsi qu'un élément de commande électronique (4), lesquels sont connectés ensemble côté secondaire à un transformateur (6),
**caractérisé en ce que**
- le transformateur (6) est équipé côté primaire d'un fusible thermique (7) ainsi que d'un commutateur (13, 14), moyennant quoi
- le commutateur (13, 14), en cas de fusible thermique (7) activé, coupe une alimentation en tension (2) côté primaire,
- le commutateur (13, 14) étant disposé dans un circuit électrique de court-circuitage (15) protégé par un coupe-circuit (17) du côté de sortie de l'alimentation en tension (2) côté primaire,
- le coupe-circuit (17) interrompant l'alimentation en courant (2) côté primaire en cas de court-circuit réel,
- le commutateur (13, 14) étant réalisé en deux pièces avec un élément de commutation (14) disposé dans le circuit électrique de court-circuitage (15) et un élément d'actionnement (13) se trouvant dans un circuit de commutation de déclenchement,
- le circuit de commutation de déclenchement (10) présentant un redresseur (11) pour la sollicitation de l'élément d'actionnement (13), et moyennant quoi
- en cas de réponse du fusible thermique (7), le circuit de commutation de déclenchement (10) est sollicité et une tension alternative appliquée est convertie à l'aide du redresseur (11) en une tension continue afin de solliciter l'élément d'actionnement (13), de sorte que
- le circuit électrique de court-circuitage est directement fermé ainsi que le coupe-circuit (17) qui y est prévu tout comme par conséquent l'alimentation en tension (2) côté primaire est interrompue.

2. Dispositif d'alimentation électrique selon la revendication 1, **caractérisé en ce que** le fusible thermique (7) est disposé dans au moins un enroulement côté primaire du transformateur (6) afin de détecter un éventuel court-circuit de spires ou un autre excès de température.

3. Dispositif d'alimentation électrique selon les revendications 1 ou 2, **caractérisé en ce qu'**une résistance est mise en boucle dans le circuit électrique de court-circuitage (15), en particulier une résistance haute performance (16).

4. Dispositif d'alimentation électrique selon l'une des revendications 1 à 3, **caractérisé en ce que** le commutateur (13, 14) est réalisé en tant que relais (13, 14).

5. Dispositif d'alimentation électrique selon l'une des revendications 1 à 4, **caractérisé en ce que** le commutateur (13, 14) est réalisé de manière encapsulée.

6. Dispositif d'alimentation électrique selon l'une des revendications 1 à 5, **caractérisé en ce que** l'élément d'actionnement (13) du commutateur (13, 14) est conçu en tant que bobine de relais (13) et l'élément de commutation (14) en tant que contact de relais (14).
